(19) Europäisches Patentamt / European Patent Office / Office européen des brevets

(11) **EP 2 570 699 B1**

(12) **EUROPÄISCHE PATENTSCHRIFT**

(45) Veröffentlichungstag und Bekanntmachung des Hinweises auf die Patenterteilung:
**02.04.2014 Patentblatt 2014/14**

(51) Int Cl.:
**F16H 25/14** *(2006.01)*

(21) Anmeldenummer: **12006501.6**

(22) Anmeldetag: **17.09.2012**

(54) **Kurbelwellenanordnung**

Crankshaft assembly

Agencement de vilebrequin

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2011 DE 102011113375**
**17.09.2011 DE 102011113408**

(43) Veröffentlichungstag der Anmeldung:
**20.03.2013 Patentblatt 2013/12**

(73) Patentinhaber: **EuroSun Vacuum-Solar-Systems GmbH**
**35039 Marburg (DE)**

(72) Erfinder: **Reh, Georg Augustin**
**87059 Immenstadt (DE)**

(74) Vertreter: **Von Rohr**
**Patentanwälte Partnerschaft**
**Rüttenscheider Straße 62**
**45130 Essen (DE)**

(56) Entgegenhaltungen:
**US-A- 5 331 926**

**Beschreibung**

Die Erfindung betrifft eine Kurbelwellenanordnung mit einer Kurbelwelle und mit wenigstens einem Drucksegment, ausgebildet zur Umwandlung einer translatorischen und/oder kippenden und/oder drehenden Bewegung des Drucksegmentes in eine rotatorische Bewegung der Kurbelwelle oder umgekehrt, wobei das Drucksegment periodisch in Richtung zur Kurbelwelle hin und von der Kurbelwelle weg bewegbar ist und periodisch mit einem mit der Kurbelwelle verbundenen Mitnehmerteil in Kontakt tritt, wobei vom Drucksegment im Kontaktzustand eine auf das Mitnehmerteil wirkende Druckkraft und ein auf die Kurbelwelle wirkendes Drehmoment erzeugt wird oder wobei im Kontaktzustand vom Mitnehmerteil eine auf das Drucksegment wirkende Druckkraft zur Bewegung des Drucksegmentes weg von der Kurbelwelle erzeugt wird und wobei das Drucksegment im Kontaktzustand unmittelbar gegen das Mitnehmerteil anliegt. Darüber hinaus betrifft die vorliegende Erfindung eine Kraftmaschine mit einer eine Arbeitsmaschine, wie einen Generator oder eine Pumpe, antreibenden Kurbelwellenanordnung der vorgenannten Art und mit einem insbesondere druckgas- oder druckluftbetriebenen Antrieb zur Bewegung eines Drucksegmentes oder einer Kurbelwelle der Kurbelwellenanordnung.

Aus der US 5 331 926 A ist eine Kurbelwellenanordnung mit einer Kurbelwelle und wenigstens einem Drucksegment, ausgebildet zur Umwandlung einer Bewegung des Drucksegmentes in eine rotatorische Bewegung der Kurbelwelle oder umgekehrt, mit den Oberbegriffsmerkmalen von Patentanspruch 1 bekannt.

Aus der DE 10 2006 012 326 A1 ist eine Kurbelwellenanordnung mit einer Kurbelwelle und mit einem mit Druckluft verstellbaren Drucksegment bekannt, die zur Umwandlung einer translatorischen Bewegung des Drucksegmentes in eine rotatorische Bewegung der Kurbelwelle bzw. zur Umwandlung von Translationsenergie in Rotationsenergie ausgebildet ist. Hierbei wirkt das Drucksegment gegen ein als Schlitten ausgebildetes Mitnehmerteil. Das Drucksegment liegt hierzu bei der Energieumwandlung bzw. -übertragung unmittelbar gegen eine Antriebsrolle des Schlittens an. Der Schlitten ist über einen mittig am Schlitten gelagerten Kurbelzapfen einer Kurbelwange mit der Kurbelwelle einerseits und über zwei Führungswellen mit einer drehbar gelagerten Führungsscheibe verbunden. Im Kontaktzustand wird vom Drucksegment eine Druckkraft auf den Schlitten zur Erzeugung eines auf die Kurbelwelle wirkenden Drehmomentes übertragen. Bei der Kraftübertragung vom Drucksegment auf den Schlitten führt dieser eine kombinierte Rotationsbewegung um die Drehachse der Kurbelwelle und Translationsbewegung entlang der Führungswellen aus. Bei der Rotation der Kurbelwelle ändert sich die Bewegungsrichtung des Schlittens entlang der Führungswellen periodisch, wobei eine erste Antriebsrolle an einem Ende des Schlittens oder eine zweite Antriebsrolle am anderen gegenüberliegenden Ende des Schlittens periodisch mit dem Drucksegment in Wirkkontakt tritt und dabei entlang einer Kurvenbahn an dem Drucksegment abläuft.

Von Nachteil bei der bekannten Kurbelwellenanordnung ist, dass der Schlitten bei Rotation der Kurbelwelle eine Translationsbewegung entlang der Führungswellen ausführt und dabei periodisch abgebremst und erneut beschleunigt werden muss. Dies führt zu einem unrunden Lauf der Kurbelwelle. Das periodische Abbremsen und Beschleunigen des Schlittens bei der translatorischen Bewegung entlang der Führungswellen und die bei der translatorischen Bewegung auftretenden Energieverluste durch Reibung führen zu einem verringerten Wirkungsgrad bei der Energieumwandlung mit der bekannten Kraftmaschine. Die bekannte Kraftmaschine weist im Übrigen einen komplizierten konstruktiven Aufbau und eine große Bauteilanzahl auf, was die Ausfall- und Verschleißanfälligkeit der bekannten Kraftmaschine erhöht und zu hohen Herstellungs-, Wartungs- und Betriebskosten führt.

Aufgabe der vorliegenden Erfindung ist es, eine Kurbelwellenanordnung und eine Kraftmaschine jeweils der eingangs genannten Art zur Verfügung zu stellen, die die Umwandlung einer vorzugsweise translatorischen Bewegung des Drucksegmentes in eine rotatorische Bewegung der Kurbelwelle oder umgekehrt in einfacher Weise bei hohem Wirkungsgrad der Energieumwandlung zulässt und sich durch einen einfachen Aufbau mit geringer Bauteilanzahl und durch geringe Herstellungs-, Wartungs- und Instandhaltungskosten auszeichnet.

Die vorgenannte Aufgabe wird bei einer Kurbelwellenanordnung der eingangs genannten Art dadurch gelöst, dass das Mitnehmerteil bei der Rotation der Kurbelwelle eine lediglich rotatorische Bewegung ausführt. Im Unterschied zu der aus der DE 10 2006 012 326 A1 bekannten Kurbelwellenanordnung wird das Mitnehmerteil bei der erfindungsgemäßen Kurbelwellenanordnung bei der Bewegungs- bzw. Energieumwandlung nicht in transversaler Richtung verschoben, sondern führt lediglich eine Drehbewegung um die Drehachse der Kurbelwelle aus. Die mit einer zusätzlichen translatorischen Bewegung des Mitnehmerteils verbundenen oben beschriebenen Nachteile können daher erfindungsgemäß nicht auftreten. Das Mitnehmerteil wird bei der Bewegungs- bzw. Energieumwandlung zusammen mit der Kurbelwelle um die Drehachse der Kurbelwelle bewegt, wobei das Mitnehmerteil und die Kurbelwelle eine gleiche Drehrichtung aufweisen.

In Übereinstimmung mit der aus der DE 10 2006 012 326 A1 bekannten Kurbelwellenanordnung liegt das Drucksegment lediglich während der Übertragung der Druckkraft gegen das Mitnehmerteil an, d. h. zeitweise bzw. periodisch, und unterscheidet sich somit von einem aus dem Stand der Technik an sich bekannten Kurbeltrieb, bei dem die Kurbelwelle während einer Umdrehung der Kurbelwelle stets über Pleuelstangen mit Antriebskolben verbunden ist.

Bei rotierender Kurbelwelle tritt das Mitnehmerteil periodisch bzw. zyklisch bei jeder Umdrehung der Kurbelwelle mit dem Drucksegment unmittelbar in Kontakt. Für eine Drehmomenterzeugung kann das Drucksegment nach dem Inkontakttreten mit dem Mitnehmerteil in Richtung zur Kurbelwelle verstellt werden, so dass eine Antriebskraft auf das Mitnehmerteil erzeugt wird, die in Drehrichtung der Kurbelwelle wirkt und ein Drehmoment an der Kurbelwelle erzeugt. Die hierfür erforderliche Verstellbewegung bzw. der jeweilige Hub des Drucksegmentes ist von der Rotation der Kurbelwelle bzw. von dem jeweiligen Dreh- bzw. Kurbelwellenwinkel abhängig, wobei der Hub mit steigendem Dreh- bzw. Kurbelwellenwinkel zunimmt. Gleichzeitig dreht sich das Mitnehmerteil entlang einer Kreisbahn um die Drehachse der Kurbelwelle weiter. Bei Erreichen eines bestimmten Dreh- bzw. Kurbelwellenwinkels wird dann das Drucksegment um mindestens den ausgeführten Verstellweg zurück von der Kurbelwelle weg bewegt und dabei von dem Mitnehmerteil entkoppelt, bevor das rotierende Mitnehmerteil bei der nächsten Umdrehung erneut mit dem Drucksegment in Kontakt tritt und durch eine erneute Verstellbewegung des Drucksegmentes in Richtung hin zur Kurbelwelle angetrieben wird. Mit zunehmendem Kurbelwellenwinkel, über den das Mitnehmerteil angetrieben wird, steigt dabei die von der Druckkraft verrichtete Arbeit.

Um Arbeit an dem Drucksegment zu verrichten, kann bei angetriebener Kurbelwelle vorgesehen sein, dass das Mitnehmerteil nach dem Inkontakttreten mit dem Drucksegment eine Verstellkraft auf das Drucksegment ausübt, die zur Verstellung des Drucksegmentes in einer Richtung weg von der Kurbelwelle führt. Nachdem das rotierende Mitnehmerteil eine Stellung erreicht hat, die einem bestimmten Dreh- bzw. Kurbelwellenwinkel entspricht, wird das Drucksegment dann um mindestens den ausgeführten Hub zurück in Richtung zur Kurbelwelle bewegt, bevor das Mitnehmerteil bei der nächsten Umdrehung der Kurbelwelle erneut in Kontakt mit dem Drucksegment kommt und erneut Arbeit an dem Drucksegment verrichten kann. Die erfindungsgemäße Kurbelwellenanordnung kann damit bedarfsweise zur Drehmomenterzeugung oder zur Erzeugung einer Verstellbewegung des Drucksegmentes eingesetzt werden.

Grundsätzlich lässt es die Erfindung jedoch auch zu, dass die Übertragung kinetischer Energie im Kontaktzustand zwischen dem Mitnehmerteil und dem Drucksegment kurzzeitig bzw. stoßartig (impulsartig) erfolgt. Bei der Drehmomenterzeugung kann das Drucksegment dabei gegen das Mitnehmerteil anschlagen und einen Impuls übertragen, der das Mitnehmerteil antreibt und weiterdreht.

Die erfindungsgemäße Kurbelwellenanordnung kann Teil einer Kraftmaschine sein und eine Arbeitsmaschine, wie beispielsweise einen Generator oder eine Pumpe, antreiben. Die erfindungsgemäße Kraftmaschine kann sowohl für den stationären als auch für den mobilen Betrieb ausgebildet und vorgesehen sein.

Die Antriebs- bzw. Verstellkraft zur Bewegung des Drucksegmentes bei der Drehmomenterzeugung oder zur Rotation der Kurbelwelle bei der Verrichtung von Arbeit an dem Drucksegment kann beispielsweise mit einem insbesondere druckgas-, druckluft- oder dampfbetriebenen Antrieb erzeugt werden. Beispielsweise kann das Drucksegment mit einer Kolben-Zylinder-Anordnung gekoppelt sein, die druckgas- bzw. druckluftbetrieben ist und das Drucksegment mittels eines Kolbens in Richtung zur Kurbelwelle verschiebt, um ein auf die Kurbelwelle wirkendes Drehmoment zu erzeugen.

Bei einer bevorzugten Ausführungsform der Erfindung kann vorgesehen sein, dass die Kurbelwelle wenigstens eine Kurbelwange aufweist, an der das Mitnehmerteil exzentrisch festgesetzt ist. Grundsätzlich kann auch die Kurbelwange als solche für einen Antrieb genutzt werden, wobei die Kurbelwange beispielsweise eine bestimmte nicht-kreisförmige Kontur aufweisen kann, so dass ein Abschnitt der Kurbelwange einen Exzenterabschnitt bildet, der gegen das Drucksegment wirkt.

Um die Reibung zwischen dem Mitnehmerteil und dem Drucksegment bei der Verrichtung mechanischer Arbeit zu verringern, kann das Mitnehmerteil und/oder das Drucksegment eine reibungsmindernde Beschichtung aufweisen, die im Kontaktzustand gegen das Drucksegment bzw. das Mitnehmerteil anliegt. Hier ist eine geeignete Materialpaarung von Drucksegment und Mitnehmerteil zu wählen, um die Reibung gering zu halten. Alternativ oder ergänzend kann vorgesehen sein, dass das Mitnehmerteil und/oder das Drucksegment ein Roll-, Gleit- oder Wälzelement aufweist, das im Kontaktzustand gegen das Drucksegment bzw. das Mitnehmerteil anliegt. Das Mitnehmerteil kann beispielsweise durch einen Kurbelwellenzapfen mit einer auf dem Kurbelwellenzapfen drehbar gelagerten Andruckrolle gebildet werden.

Vorzugsweise ist eine Mehrzahl von Drucksegmenten und/oder eine Mehrzahl von Mitnehmerteilen vorgesehen. Beispielsweise können mehrere Drucksegmente vorgesehen sein, wobei jedes Drucksegment mit einem insbesondere druckgas- oder druckluftbetriebenen Antrieb zur Bewegung des jeweiligen Drucksegmentes gekoppelt sein kann. Auch kann eine Mehrzahl von Mitnehmerteilen vorgesehen sein, die bei Rotation der Kurbelwelle gleichzeitig gegen ein Drucksegment wirken. Vorzugsweise steht jedoch ein Drucksegment jeweils lediglich mit einem Mitnehmerteil in Wirkkontakt. Dadurch lassen sich ein gleichmäßiger ruhiger Lauf der Kurbelwelle bei der Bewegungsumwandlung und ein hoher energetischer Wirkungsgrad sicherstellen.

Mehrere Drucksegmente können auf unterschiedlichen Seiten der Kurbelwelle gegenüberliegend angeordnet sein, wobei, vorzugsweise, jeweils wenigstens zwei gegenüberliegende Drucksegmente auf einer gemeinsamen Querachse angeordnet sind und gleichzeitig über wenigstens zwei Mitnehmerteile auf die Kurbelwelle wirken. Diese Anordnung kann in Längsrichtung der Kurbelwelle redundant ausgeführt sein. Auch können mehrere gegenüberliegende Drucksegmente in Längsrichtung der Kurbelwelle versetzt zueinander angeordnet sein.

Das Drucksegment kann auf der dem Mitnehmerteil zugewandten Seite eine Kurvenbahn aufweisen, auf der das Mitnehmerteil bei Rotation der Kurbelwelle zumindest bereichsweise bzw. über einen bestimmten Dreh- bzw. Kurbelwellenwinkel abläuft, wobei, vorzugsweise, die resultierende im Kontaktpunkt auf das Mitnehmerteil wirkende Druckkraft über die gesamte Länge der Kurvenbahn, über die das Mitnehmerteil mit dem Drucksegment in Kontakt tritt, die Gerade durch den Drehpunkt der Kurbelwelle und den Kontaktpunkt schneidet. Mit anderen Worten bedeutet dies, dass über die gesamte Länge der Kurvenbahn, über die das Mitnehmerteil mit dem Drucksegment in Wirkkontakt tritt, eine Druckkraft von dem Drucksegment auf das Mitnehmerteil übertragen wird. Ein Tot- oder Fluchtpunkt, bei dem der Kraftvektor der resultierenden Druckkraft auf der Geraden durch den Drehpunkt der Kurbelwelle und den Kontaktpunkt liegt, wird während dem Ablaufen des Mitnehmerteils auf der Ablaufbahn des Druckelementes und der Verstellbewegung des Drucksegmentes in Richtung zur Kurbelwelle nicht ausgebildet. Im Flucht- oder Totpunkt wirkt die resultierende Druckkraft lediglich in Normalenrichtung auf das von dem Drucksegment angetriebene Mitnehmerteil. Dadurch sind ein verzögerungsfreier Lauf der Kurbelwelle und ein hoher energetischer Wirkungsgrad bei der Bewegungsumwandlung sichergestellt. Das gleiche gilt entsprechend, wenn die Kurbelwelle angetrieben ist und mechanische Arbeit an dem Drucksegment verrichtet werden soll.

In diesem Zusammenhang sieht eine bevorzugte Ausführungsform der Erfindung eine halbkreisförmige Kurvenbahn vor, wobei der Radius der Kurvenbahn für jeden Kurbelwellenwinkel bei der Rotationsbewegung des Mitnehmerteils größer ist als der Abstand vom Drehpunkt der Kurbelwelle zu dem jeweiligen Kontaktpunkt zwischen Mitnehmerteil und Drucksegment und wobei der Drehpunkt der Kurbelwelle und der Mittelpunkt der Kurvenbahn nicht zusammenfallen. Aufgrund der Verschiebung von Drehpunkt der Kurbelwelle und Mittelpunkt der Kurvenbahn wird ein Tot- oder Fluchtpunkt nicht erreicht. Dies ermöglicht einen verzögerungsfreien Lauf der Kurbelwelle bei der Bewegungsumwandlung, die bei einer Verstellbewegung (einem Hub) des Drucksegmentes bzw. bei Rotation des Mitnehmerteils über einen bestimmten Winkelbereich erfolgt. Der horizontale Abstand zwischen dem Drehpunkt der Kurbelwelle und dem Mittelpunkt der Kurvenbahn ändert sich dabei mit Verstellung des Drucksegmentes bzw. dessen Annäherung an die Kurbelwelle.

Grundsätzlich ist es auch möglich, dass die Kurvenbahn halbkreisförmig ist, wobei der Radius der Kurvenbahn im Wesentlichen dem Abstand vom Drehpunkt der Kurbelwelle zum Kontaktpunkt zwischen Drucksegment und Mitnehmerteil entspricht und wobei der Drehpunkt der Kurbelwelle und der Mittelpunkt der Kurvenbahn zusammenfallen. In diesem Fall ist vorzugsweise vorgesehen, das Drucksegment noch vor Erreichen eines Tot- oder Fluchtpunktes außer Kontakt mit dem Mitnehmerteil zu bringen, was durch eine entsprechende Verstellbewegung des Drucksegmentes in Richtung weg von der Kurbelwelle erreicht werden kann.

Weiter vorzugsweise ist vorgesehen, dass die Druckkraft kontinuierlich über eine einem Kurbelwellenwinkelbereich von 20 bis 150°, vorzugsweise von 10 bis 160° oder mehr, entsprechende Bogenlänge der Kurvenbahn übertragen wird. Je größer der Kurbelwellenwinkelbereich, über den ein Kontakt zwischen dem Mitnehmerteil und dem Drucksegment besteht und eine Druckkraft wirkt, desto größer ist der zugeordnete Verstellweg des Drucksegmentes und damit auch die mechanische Arbeit, die von der Druckkraft beim Ablaufen des Mitnehmerteils auf der Kurvenbahn verrichtet werden kann.

Im Einzelnen gibt es eine Vielzahl von Möglichkeiten, die erfindungsgemäße Kurbelwellenanordnung und die erfindungsgemäße Kraftmaschine auszugestalten und weiterzubilden, wobei einerseits auf die abhängigen Patentansprüche und andererseits auf die nachfolgende detaillierte Beschreibung eines bevorzugten Ausführungsbeispiels der Erfindung unter Bezugnahme auf die Zeichnung verwiesen wird. Die oben beschriebenen Aspekte und Merkmale der vorliegenden Erfindung sowie die nachfolgend beschriebenen Aspekte und Merkmale der vorliegenden Erfindung können unabhängig voneinander, aber auch in einer beliebigen Kombination realisiert werden. In der Zeichnung zeigen:

Fig. 1      eine perspektivische Darstellung einer erfindungsgemäßen Kurbelwellenanordnung mit einer Kurbelwelle und mit einem Drucksegment, ausgebildet zur Umwandlung einer Bewegung des Drucksegmentes in eine rotatorische Bewegung der Kurbelwelle oder umgekehrt,

Fig. 2      eine Querschnittsansicht der in Fig. 1 dargestellten Kurbelwellenanordnung entlang der Schnittlinie II-II aus Fig. 1,

Fig. 3 bis 5      die jeweilige Lage des Mitnehmerteils relativ zum Drucksegment beim Ablaufen entlang einer Kurvenbahn des Drucksegmentes und bei Erreichen unterschiedlicher Kurbelwellenwinkel,

Fig. 6      eine schematische Darstellung einer Kurbelwellenanordnung mit zwei Drucksegmenten und zwei Mitnehmerteilen,

Fig. 7      eine schematische Darstellung der Verschiebung des Mittelpunkts der Kurvenbahn des Drucksegmentes zum Drehpunkt der Kurbelwelle bei der Übertragung von Antriebsenergie von dem Drucksegment auf die Kurbelwelle,

Fig. 8     eine schematische Darstellung einer weiteren Ausführungsform einer erfindungsgemäßen Kurbelwellenanordnung in einer Ansicht auf zwei Mitnehmerteile einer Kurbelwelle der Kurbelwellenanordnung und

Fig. 9     eine schematische Darstellung der in Fig. 8 gezeigten Kurbelwellenanordnung in einer Ansicht auf ein Stehlager der Kurbelwelle.

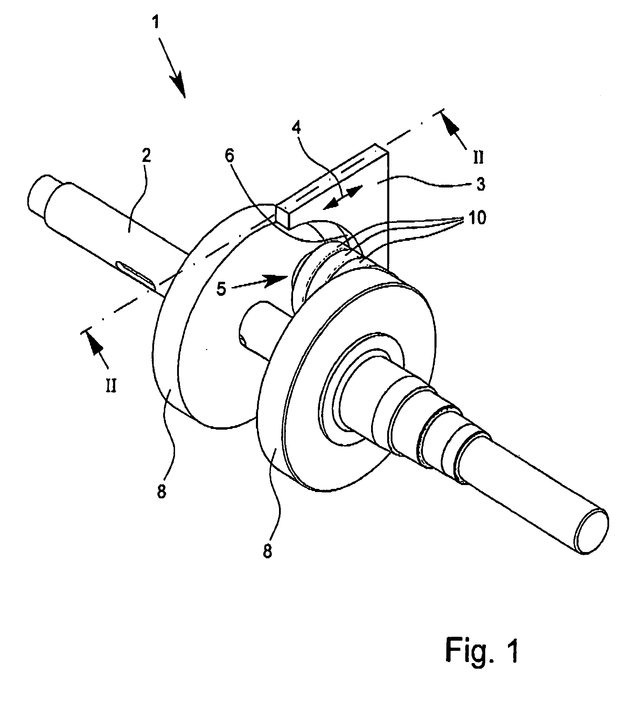

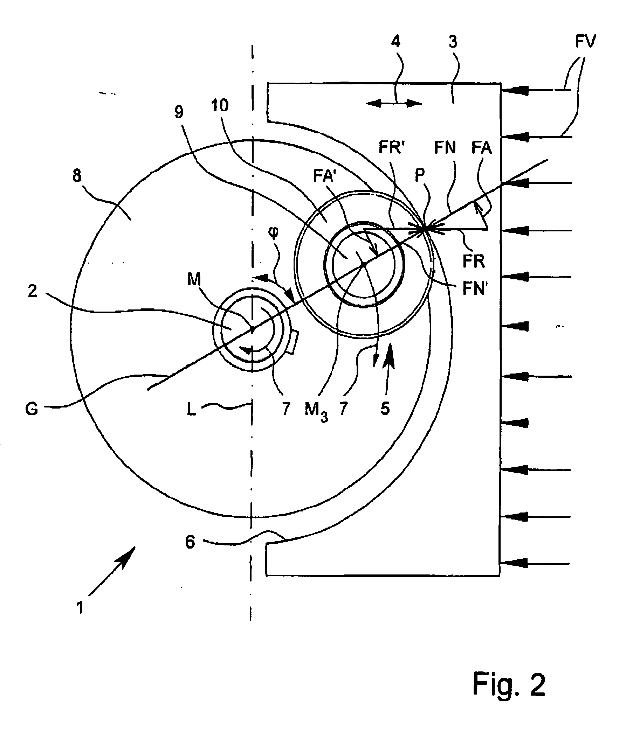

In den Fig. 1 und 2 ist eine Kurbelwellenanordnung 1 mit einer Kurbelwelle 2 und mit wenigstens einem Drucksegment 3 gezeigt. Die Kurbelwellenanordnung 1 ist gemäß der dargestellten Ausführungsform zur Umwandlung einer geradlinigen bzw. translatorischen Hubbewegung des Drucksegmentes 3 in eine rotatorische Bewegung der Kurbelwelle 2 oder umgekehrt ausgebildet und vorgesehen. Das Drucksegment 3 wird dabei periodisch bzw. zyklisch in Richtung zur Kurbelwelle 2 hin und von der Kurbelwelle 2 weg bewegt, was durch den Pfeil 4 dargestellt ist. Grundsätzlich kann das Drucksegment 3 auch eine drehende, kippende oder kombinierte Bewegung in Richtung zur Kurbelwelle 2 hin und von der Kurbelwelle 2 weg ausführen.

Die dargestellte Kurbelwellenanordnung 1 zeichnet sich durch einen einfachen konstruktiven Aufbau bei geringer Bauteilanzahl aus und ist damit wenig ausfall- und verschleißanfällig, was insgesamt dazu beiträgt, Herstellungs-, Wartungs- und Instandhaltungskosten zu senken. Im Übrigen ist der Wirkungsgrad bei der Umwandlung von insbesondere Translationsenergie in Rotationsenergie und umgekehrt aufgrund geringer Reibungsverluste bei der Energieumwandlung gegenüber aus dem Stand der Technik bekannten Kurbelwellenanordnungen hoch.

Bei rotierender Kurbelwelle 2 tritt bei jeder Umdrehung der Kurbelwelle 2 ein Mitnehmerteil 5 periodisch bzw. zyklisch mit dem Drucksegment 3 unmittelbar in Kontakt. Wird das Drucksegment 3 wie in Fig. 2 dargestellt mit einer Verstellkraft FV angetrieben und soll eine Verstellbewegung des Drucksegmentes 3 in eine Drehbewegung der Kurbelwelle 2 umgewandelt und ein auf die Kurbelwelle 2 wirkendes Drehmoment erzeugt werden, so wird durch eine Hubbewegung des Drucksegmentes 3 in Richtung zur Kurbelwelle 2 nach dem Inkontakttreten mit dem Mitnehmerteil 5 eine in einem Kontaktpunkt P auf das Mitnehmerteil 5 wirkende resultierende Druckkraft FR erzeugt. Die Verstellkraft FV kann beispielsweise über wenigstens einen Kolben einer insbesondere druckgas- oder druckluftbetriebenen Kolben-Zylinder-Einheit erzeugt werden, die als Antrieb für das Drucksegment 3 vorgesehen ist, wobei der Kolben mit dem Drucksegment 3 kinematisch gekoppelt ist. Die Kurbelwellenanordnung 1 bildet dann zusammen mit dem Antrieb eine Kraftmaschine, wobei die Kurbelwellenanordnung 1 ihrerseits zum Antrieb einer Arbeitsmaschine, wie beispielsweise eines Generators oder einer Pumpe oder einer anderen Arbeitsmaschine, eingesetzt werden kann.

Um einen einfachen konstruktiven Aufbau und einen hohen Wirkungsgrad bei der Umwandlung von Bewegungsenergien zu gewährleisten, ist bei der dargestellten Kurbelwellenanordnung 1 vorgesehen, dass das Mitnehmerteil 5 bei Rotation der Kurbelwelle 2 eine lediglich rotatorische Bewegung zusammen mit der Kurbelwelle 2 ausführen kann.

Bei den dargestellten Ausführungsformen weist das Drucksegment 3 jeweils eine Kurvenbahn 6 mit einer halbkreisförmigen Kontur auf, wobei das Drucksegment 3 zur Erzeugung einer Druckkraft FR auf das jeweilige Mitnehmerteil 5 in Richtung zur Kurbelwelle 2 verstellt wird und dabei einen geradlinigen Hub H ausführt. Das Mitnehmerteil 5 läuft periodisch bzw. zyklisch auf der Kurvenbahn 6 ab, wobei die Kontur der Kurvenbahn 6 so ausgeführt ist und das Mitnehmerteil 5 derart an dem Drucksegment 3 entlang geführt wird, dass aufgrund der gleichzeitig zur Rotationsbewegung des Mitnehmerteils 5 stattfindenden Hubbewegung des Drucksegmentes 3 eine in Drehrichtung 7 der Kurbelwelle 2 wirkende Antriebskraftkomponente FA' erzeugt wird, die die Kurbelwelle 2 über das Mitnehmerteil 5 in Drehung versetzt. Die resultierende Druckkraft FR lässt sich dabei in eine Normalkraftkomponente FN' und in die Antriebskraftkomponente FA' zerlegen, wobei lediglich die Antriebskraftkomponente FA' zur Drehmomenterzeugung führt. Der Vektor der Normalkraftkomponente FN' liegt in der Geraden G durch den Drehpunkt M der Kurbelwelle 2 und dem Kontaktpunkt P und kann daher kein Antriebsmoment erzeugen.

Um die Hubbewegung des Drucksegmentes 3 und die Rotationsbewegung der Kurbelwelle 2 zeitlich aufeinander abzustimmen, kann eine nicht dargestellte Steuer- und/oder Regeleinrichtung vorgesehen sein.

Durch die am Kontaktpunkt P wirkende resultierende Druckkraft FR, genauer gesagt, durch deren Antriebskraftkomponente FA', wird das Mitnehmerteil 5 zusammen mit der Kurbelwelle 2 entlang der Kurvenbahn 6 in Drehrichtung 7 der Kurbelwelle 2 verschoben, was in Fig. 2 schematisch dargestellt ist. Beim Verschieben des Mitnehmerteils 5 verrichtet die Druckkraft FR mechanische Arbeit an dem Mitnehmerteil 5 bzw. an der Kurbelwelle 2. Es wird somit kinetische Energie von dem Drucksegment 3 auf das Mitnehmerteil 5 übertragen. Mit anderen Worten wird Translationsenergie in Rotationsenergie umgewandelt.

Vorzugsweise liegt das Mitnehmerteil 5 bei der Rotation der Kurbelwelle 2 nicht über die gesamte Länge der Kurvenbahn 6 gegen das Drucksegment 3 an, sondern lediglich über einen Teil der Länge, der einem bestimmten Winkelbereich eines Kurbelwellenwinkels p bzw. Drehwinkels der Kurbelwelle 2 entspricht. Im Winkelbereich zwischen einem ersten kleineren Kurbelwellenwinkel p, bei dem das Mitnehmerteil 5 bei rotierender Kurbelwelle 2 mit dem Drucksegment 3 in Kontakt tritt, und einem zweiten größeren Kurbelwellenwinkel p wird dann durch die gleichzeitig zur Rotationsbewegung des Mitnehmerteils 5 erfolgende Hubbewegung des Drucksegmentes 3 eine gegen das Mitnehmerteil 5 wirkende Druckkraft FR und ein Antriebsmoment auf die Kurbelwelle 2 erzeugt. Bei Erreichen des zweiten größeren Kurbelwellenwinkels p wird das Drucksegment 3 um mindestens den ausgeführten Hub H zurück von der Kurbelwelle 2 weg bewegt und von dem Mitnehmerteil 5 entkoppelt, bevor das Mitnehmerteil 5 bei der nächsten Umdrehung erneut in den Bereich der Kurvenbahn 6 einläuft.

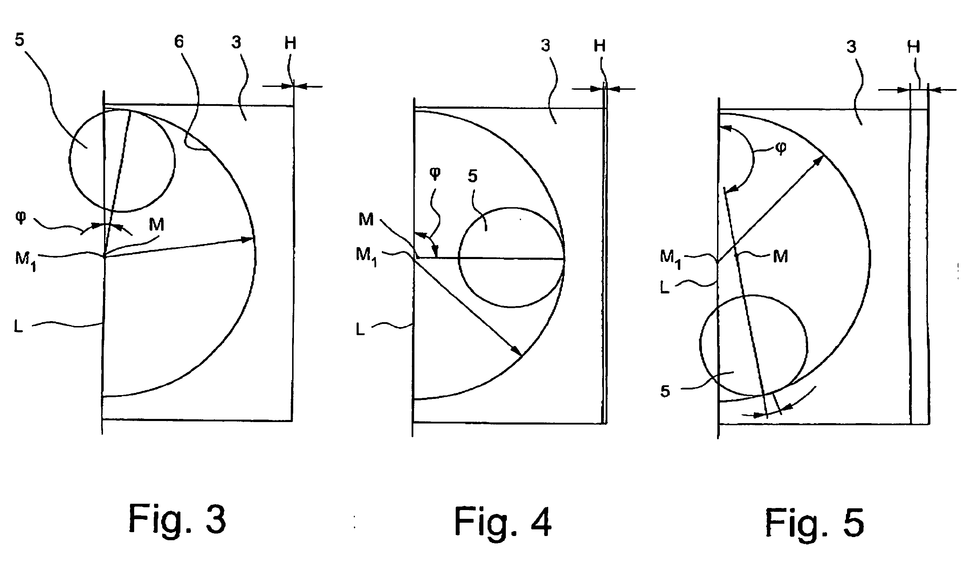

Das Zurückstellen des Drucksegmentes 3 erfolgt vorzugsweise dann, wenn das Mitnehmerteil 5 bei der Rotationsbewegung um den Drehpunkt M der Kurbelwelle 2 in eine Position auf der Kurvenbahn 6 gelangt, an der die Antriebskraftkomponente FA der im Kontaktpunkt P auf das Mitnehmerteil 5 wirkenden resultierenden Druckkraft FR nur noch gering ist. Wie sich aus den Fig. 3 bis 5 ergibt, die den Bewegungsablauf des Mitnehmerteils 5 schematisch für einen Kurbelwellenwinkel von 10 bis 160° zeigen, tritt das Mitnehmerteil 5 vorzugsweise bei Rotation um einen Kurbelwellenwinkel p = 10° mit dem Drucksegment 3 in Kontakt (Fig. 3), worauf das Drucksegment 3 einen Hub H ausführt und das Mitnehmerteil 3 antreibt, bis dieses eine Position erreicht hat, die einem Kurbelwellenwinkel p = 160° (Fig. 5) entspricht.

Vorzugsweise kann in diesem Zusammenhang ein tangentialer Ein- und Auslauf des Mitnehmerteils 5 in bzw. aus der Kurvenbahn 6 vorgesehen sein. Dadurch wird ein reibungsarmer Einlauf und Auslauf des Mitnehmerteils 5 in bzw. aus der Kurvenbahn 6 gewährleistet.

Ist die Kurbelwellenanordnung 1 dagegen für eine Umwandlung einer Drehbewegung der Kurbelwelle 2 in eine insbesondere translatorische Verstellbewegung des Drucksegmentes 3 ausgebildet und vorgesehen, so tritt das Mitnehmerteil 5 bei jeder Umdrehung der Kurbelwelle 2 bei Erreichen eines bestimmten ersten kleineren Kurbelwellenwinkels p über eine bestimmte Länge der Kurvenbahn 6 mit dem Drucksegment 3 in Kontakt und erzeugt dabei eine Druckkraft auf das Drucksegment 3, durch die das Drucksegment 3 von der Kurbelwelle 2 weggedrückt wird. Es wird dabei Arbeit an dem Drucksegment 3 verrichtet. Bei Erreichen eines zweiten größeren Kurbelwellenwinkels p, wenn das Mitnehmerteil 5 aufgrund der Rotationsbewegung von der Kurvenbahn abläuft bzw. den Kontakt zum Druckelement 3 verliert, wird das Drucksegment 3 um mindestens den ausgeführten Hub zurück in Richtung zur Kurbelwelle 2 bewegt, bevor das Mitnehmerteil 5 bei der nächsten Umdrehung erneut in den Bereich der Kurvenbahn 6 einläuft. Die Kurbelwellenanordnung 1 kann somit zur Umwandlung von Rotationsenergie der Kurbelwelle 2 in Translations- oder Verstellenergie des Druckelementes 3 und umgekehrt eingesetzt werden.

Wie sich aus den Fig. 1 und 2 weiter ergibt, ist das Mitnehmerteil 5 zwischen zwei Kurbelwangen 8 angeordnet und an diesen festgesetzt. Bei Rotation der Kurbelwelle 2 rotiert das Mitnehmerteil 5 entlang einer Kreisbahn um die Drehachse der Kurbelwelle 2. Das Mitnehmerteil 5 ist im vorliegenden Fall mehrteilig ausgebildet und wird durch einen an den Kurbelwangen 8 festgesetzten Kurbelzapfen 9 und mehrere Druckrollen 10 gebildet, die an dem Kurbelzapfen 8 gelagert sind. Daraus resultiert eine hohe Stabilität der dargestellten Kurbelwellenanordnung 1 bei geringer Belastung der einzelnen Bauteile während der Bewegungs- bzw. Energieumwandlung.

Die mehreren Druckrollen 10 des Mitnehmerteils 5 lassen es bei einer entsprechenden Steuerung bzw. Regelung der aufeinander abgestimmten Bewegung von Drucksegment 3 und Kurbelwelle 2 bedarfsweise zu, dass bei der Rotation der Kurbelwelle 2 mehrere Drucksegmente 3 gleichzeitig gegen ein Mitnehmerteil 5 wirken. Um die Steuerung bzw. Regelung zu vereinfachen, ist es jedoch vorzugsweise vorgesehen, dass jedes Mitnehmerteil 5 periodisch bzw. zyklisch lediglich mit einem Drucksegment 3 in Wirkkontakt tritt.

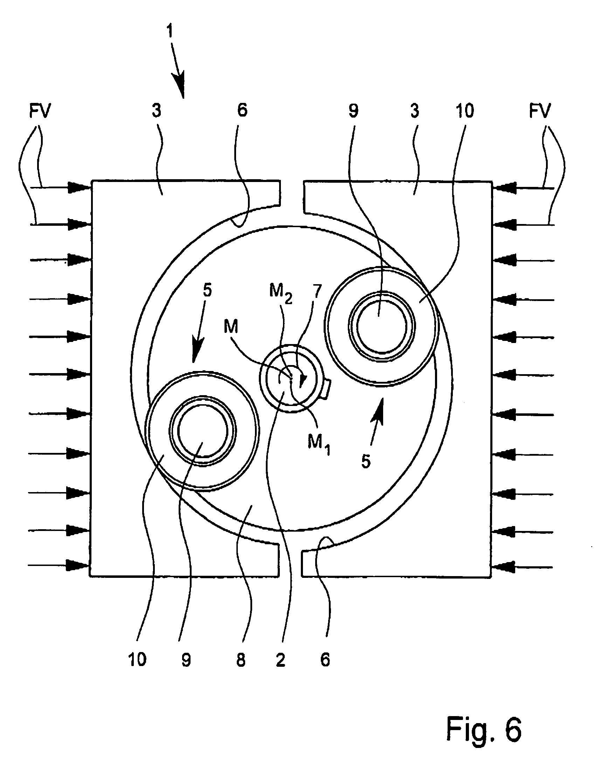

Wie sich aus Fig. 6 ergibt, können mehrere längs der Kurbelwellenachse gegenüberliegend angeordnete Drucksegmente 3 vorgesehen sein. Es können gegenüberliegend paarweise zusammenwirkende Drucksegmente 3 vorgesehen sein, wobei jeweils zwei zusammenwirkende Drucksegmente 3 auf einer gemeinsamen Querachse angeordnet sind. Ebenso ist es möglich, dass gegenüberliegend angeordnete Drucksegmente 3 in Längsrichtung der Kurbelwelle 2 versetzt zueinander angeordnet sind. Um einen Umlauf der Kurbelwelle 2 zu gewährleisten, ist wenigstens ein Drucksegment 3 erforderlich, das über ein Mitnehmerteil 5 die Kurbelwelle 2 antreibt.

Gemäß Fig. 6 weist die Kurbelwellenanordnung 1 wenigstens zwei Mitnehmerteile 5 auf, die um 180° versetzt zueinander an der Kurbelwange 8 festgesetzt sind. Dadurch wird gewährleistet, dass bei jeder Umdrehung der Kurbelwelle 2 stets lediglich ein Mitnehmerteil 5 mit einem Drucksegment 3 in Wirkkontakt tritt. Grundsätzlich können jedoch auch mehrere Mitnehmerteile 5 vorgesehen sein, die vorzugsweise nachfolgend in die Kurvenbahn 6 eines Drucksegmentes 3 einlaufen und nachfolgend in Wirkkontakt mit dem Drucksegment 3 gelangen.

Wie sich weiter aus Fig. 6 ergibt, ist der Mittelpunkt M1 der Kurvenbahn 6 des rechten Drucksegmentes 3 gegenüber dem Drehpunkt M der Kurbelwelle 2 nach unten und der Mittelpunkt M2 der Kurvenbahn 6 des linken Drucksegmentes 3 gegenüber dem Drehpunkt M der Kurbelwelle 2 nach oben versetzt angeordnet. Dadurch wird erreicht, dass der resultierende Kraftvektor der im Kontaktpunkt P wirkenden Druckkraft FR über die gesamte Länge der Kurvenbahn 6, über die das Mitnehmerteil 5 mit dem Drucksegment 3 in Kontakt steht, nicht auf der Geraden G durch den Drehpunkt der Kurbelwelle 2 und den Kontaktpunkt P liegt. Im Ergebnis durchläuft das Mitnehmerteil 5 beim Ablaufen auf der Kurvenbahn 6 keinen Totpunkt, an dem der resultierende Kraftvektor der Druckkraft FR genau auf der Geraden G liegt bzw. mit der Geraden G fluchtet und die Antriebskraft FA den Wert Null annimmt.

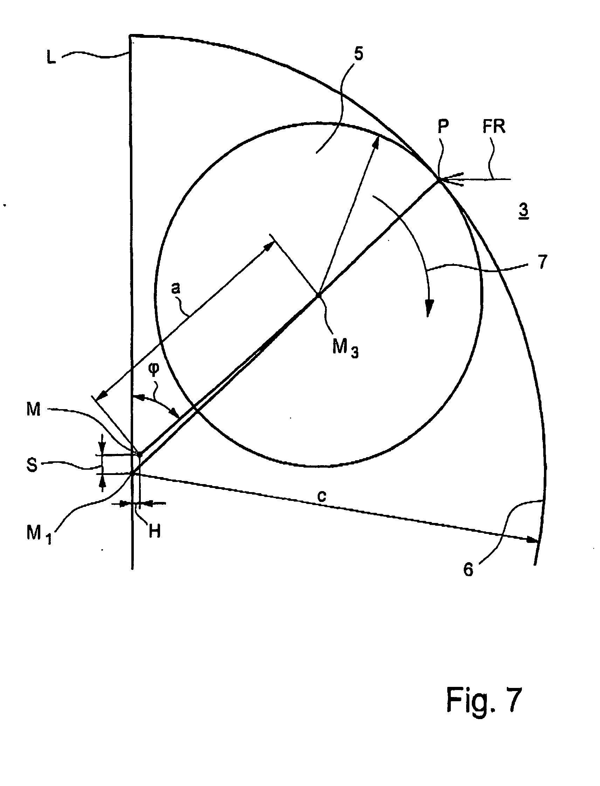

Die Verschiebung des Drehpunktes M der Kurbelwelle 2 relativ zum Mittelpunkt M1 der Kurvenbahn 6 ist in Fig. 7 schematisch dargestellt. Der jeweils für eine kinematische Kopplung erforderliche Hub H ist vom Kurbelwellenwinkel φ abhängig, wobei die vorgenannte Abhängigkeit beschrieben wird durch nachfolgende Gleichung:

$$H_{(\varphi)} = \sqrt{a^2 + s^2 - 2 \cdot a \cdot s \cdot \cos(\pi - \varphi)} \cdot \cos\left(\frac{\pi}{2} + \arcsin\left(\frac{a \cdot \sin(\pi - \varphi)}{\sqrt{a^2 + s^2 - 2 \cdot a \cdot s \cdot \cos(\pi - \varphi)}}\right)\right) +$$

$$+ \sqrt{\left(a^2 + s^2 - 2 \cdot a \cdot s \cdot \cos(\pi - \varphi)\right) \cdot \left(\cos^2\left(\frac{\pi}{2} + \arcsin\left(\frac{a \cdot \sin(\pi - \varphi)}{\sqrt{a^2 + s^2 - 2 \cdot a \cdot s \cdot \cos(\pi - \varphi)}}\right)\right) - 1\right) + a^2 + s^2 + 2 \cdot a \cdot s}$$

Der Kurbelwellenwinkel φ beschreibt dabei einen Winkel zwischen der Geraden G durch den Drehpunkt M der Kurbelwelle und den Kontaktpunkt P von Mitnehmerteil 5 und Drucksegment 3 und einer Geraden L, die durch den Anfangspunkt und den Endpunkt der Kurvenbahn 6 verläuft und tangential an das Drucksegment 3 gelegt ist. Die Gerade L verläuft parallel zu einer Senkrechten durch den Drehpunkt M der Kurbelwelle 2.

In Fig. 7 beschreibt die Länge a den Abstand des Mittelpunkts M3 des Mitnehmerteils 5 von dem Drehpunkt M der Kurbelwelle 2. Die Länge b beschreibt den Radius des Mitnehmerteils 5 bzw. der Druckrolle 10. Die Länge c beschreibt den Radius der Kurvenbahn 6. Wie Fig. 7 weiter zeigt, ist der Drehpunkt M der Kurbelwelle 2 in vertikaler Richtung um einen festen Betrag S und in horizontaler Richtung um den Hub H gegenüber dem Mittelpunkt M1 der Kurvenbahn 6 verschoben, wobei der Hub H abhängig vom Kurbelwellenwinkel φ ist. In einer Ausgangsstellung des Drucksegmentes 3, in der der Hub H einen Wert von Null annimmt, liegen der Drehpunkt M der Kurbelwelle 2 und der Mittelpunkt M1 der Kurvenbahn 6 auf einer gemeinsamen Senkrechten. Bei rein translatorischer Verstellbewegung des Drucksegmentes 3 während der Bewegungsumwandlung bzw. Energieumwandlung von Translationsenergie in Rotationsenergie ist der vertikale Versatz S konstant.

Der Radius der Kurvenbahn 6, der in Fig. 7 der Länge c entspricht, ist somit bei jedem Kurbelwellenwinkel p größer als der Abstand vom Drehpunkt M der Kurbelwelle 2 zum Kontaktpunkt P, wobei der Abstand in Fig. 7 der Länge a + b entspricht. Der Drehpunkt M der Kurbelwelle 2 und der Mittelpunkt M1 der Kurvenbahn 6 fallen im Ergebnis nicht zusammen, so dass über die gesamte Kontaktzeit zwischen dem Mitnehmerteil 5 und dem Drucksegment 3 eine resultierende Druckkraft FR auf den Kontaktpunkt P einwirkt, deren Antriebskraftkomponente FA zu einer Drehbewegung des Mitnehmerteils 5 und damit der Kurbelwelle 2 führt. Es versteht sich, dass die Kontur der Kurvenbahn 6 entsprechend ausgebildet sein muss.

Nicht dargestellt ist, dass die Kurvenbahn 6 auch halbkreisförmig sein kann, wobei der Radius der Kurvenbahn 6 im Wesentlichen dem Abstand vom Drehpunkt M der Kurbelwelle 2 zum Kontaktpunkt P zwischen Drucksegment 3 und Mitnehmerteil 5 entspricht und wobei der Drehpunkt M der Kurbelwelle 2 und der Mittelpunkt M1 der Kurvenbahn 6 zusammenfallen. Hier wird jedoch ein Totpunkt bei Rotation des Mitnehmerteils 5 um den Drehpunkt M erreicht, der bei einem Kurbelwellenwinkel φ von ca. 90° liegen kann. Bevor das Mitnehmerteil 5 bei der Rotation der Kurbelwelle 2 den Flucht- oder Totpunkt erreicht, wird das Drucksegment 3 vorzugsweise um den bis dahin ausgeführten Hub H oder darüber hinaus zurückgestellt.

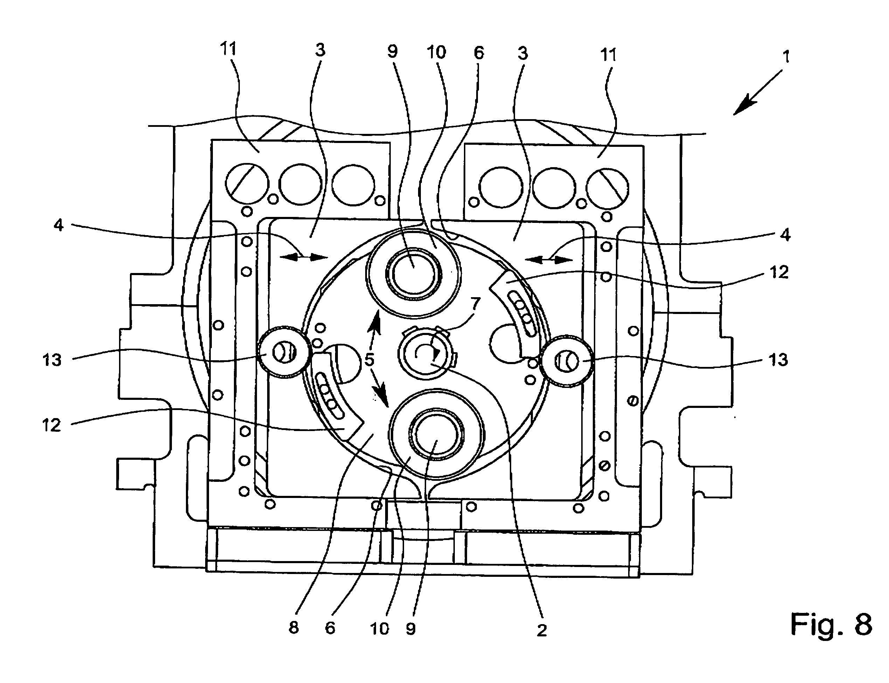

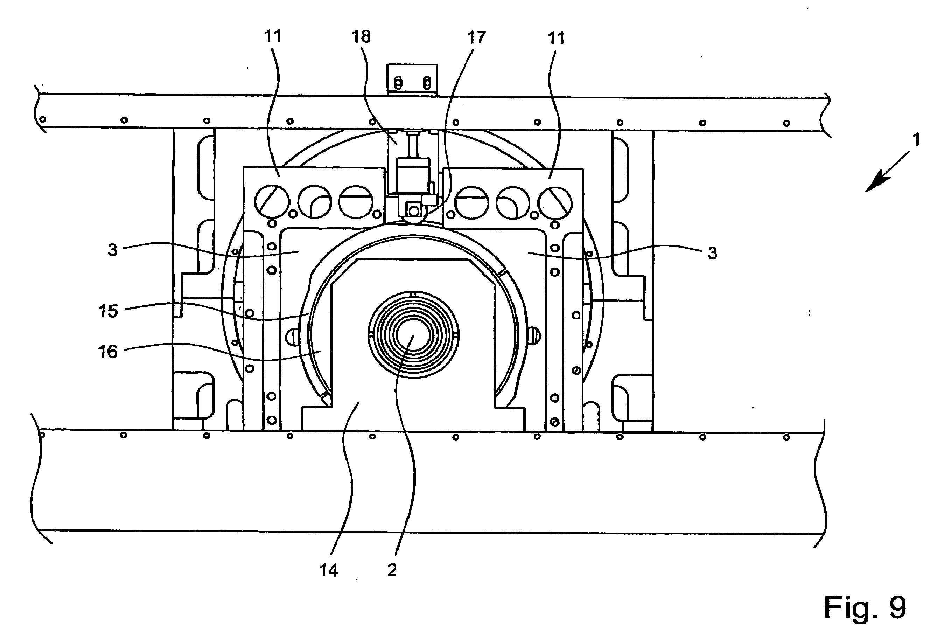

In den Fig. 8 und 9 ist eine weitere Ausführungsform einer Kurbelwellenanordnung 1 gezeigt, wobei wenigstens zwei Mitnehmerteile 5 vorgesehen sind, um bei der Bewegungsumwandlung eine Energieübertragung zwischen zwei Drucksegmenten 3 und der Kurbelwelle 2 zu ermöglichen. Die Mitnehmerteile 5 werden gebildet durch Kurbelzapfen 9 mit Rollen 10, wobei die Kurbelzapfen 9 in Umfangsrichtung um 180° versetzt bzw. gegenüberliegend an einer Kurbelwange 8 festgelegt sind. Die Rollen 10 sind drehbar an den Kurbelwellenzapfen 9 gelagert. Bei rotierender Kurbelwelle 2 liegt jedes Drucksegment 3 jeweils gegen die Rolle 10 eines Mitnehmerteils 5 unmittelbar an.

Fig. 8 zeigt die Kurbelwellenanordnung 1 in einer Ansicht auf die Mitnehmerteile 5, wobei die Drucksegmente 3 in zwei Aufnahmestücken 11 in transversaler Richtung 4 bewegbar geführt sein können. Für eine Verstellbewegung der Drucksegmente 3 wird eine Verstellkraft FR mit einem nicht im Einzelnen dargestellten Antrieb auf die Drucksegmente 3 aufgebracht, die zu einer Verstellung beider Drucksegmente 3 in Richtung zur Kurbelwelle 2 hin führen. Dadurch werden die Mitnehmerteile 5 und damit die Kurbelwelle 2 in Drehrichtung 7 angetrieben.

Nachdem ein Mitnehmerteil 5 die Kurvenbahn 6 eines Drucksegmentes 3 durchlaufen hat, was einer halben Umdrehung der Kurbelwelle 2 entspricht, wird das betreffende Drucksegment 3 um mindestens den ausgeführten Hub in die Ausgangslage zurückgestellt, bevor das nächste Mitnehmerteil 5 in die Kurvenbahn 6 des betreffenden Drucksegmentes 3 einläuft und in Kontakt mit dem betreffenden Drucksegment 3 tritt. Wenn das zweite Mitnehmerteil 5 mit dem betreffende Drucksegment 3 in Kontakt tritt, wird dieses erneut mit einer Verstellkraft eines nicht dargestellten Antriebs in Richtung zur Kurbelwelle 2 hin verstellt, um eine Druckkraft FR auf das zweite Mitnehmerteil 5 erzeugen und die Kurbelwelle 2 antreiben zu können. Zur Lagerung der Kurbelwelle 2 ist ein Lagerbock 14 vorgesehen.

Zur Zurückstellung der Drucksegmente 3 können zwei Nockenläufer 12 vorgesehen sein, die an der Kurbelwange 8 festgesetzt sind und bei Drehung der Kurbelwelle 2 mit Abdruckrollen 13 in Kontakt treten, was zu einem Zurückstellen der Drucksegmente 3 über eine mechanische Kopplung führt. Alternativ kann auch vorgesehen sein, die Zurückstellbewegung der Drucksegmente 3 über vorzugsweise als Kolben-Zylinder-Aggregate ausgebildete Antriebe zu bewerkstelligen, wobei die Antriebe durch entsprechende Beaufschlagung mit Druckgas, Druckluft oder (Wasser-)Dampf eine Verstellbewegung der Drucksegmente 3 in Richtung zur Kurbelwelle 2 hin oder von der Kurbelwelle 2 weg bewirken können.

An der Rückseite der Kurbelwange 8 sind um 180° in Umfangsrichtung gegenüber den beiden vorderseitigen Mitnehmerteilen 5 versetzt angeordnete weitere Mitnehmerteile vorgesehen, die mit weiteren Drucksegmenten 3 zusammenwirken können.

Gemäß Fig. 9 kann ein Nockenring 15 vorgesehen sein, der über eine Kurbelwange 16 mit der Kurbelwelle 2 verbunden ist und zur Antriebssteuerung der für die Verstellbewegung des oder der Drucksegmente 3 vorgesehenen Antriebseinheit bzw. zur Steuerung der Beaufschlagung der Antriebseinheit mit Druckgas, Druckluft oder Dampf, mit einer Rolle 17 einer Ventileinheit 18 zusammenwirkt, wobei die Ventileinheit 18 die Versorgung der Antriebseinheit mit einem Arbeitsfluid steuert.

## Patentansprüche

1. Kurbelwellenanordnung (1) mit einer Kurbelwelle (2) und mit wenigstens einem Drucksegment (3), ausgebildet zur Umwandlung einer Bewegung des Drucksegmentes (3) in eine rotatorische Bewegung der Kurbelwelle (2) oder umgekehrt, wobei das Drucksegment (3) periodisch in Richtung zur Kurbelwelle (2) hin und von der Kurbelwelle (2) weg bewegbar ist und lediglich periodisch mit einem mit der Kurbelwelle (2) verbundenen Mitnehmerteil (5) in Kontakt tritt, wobei im Kontaktzustand vom Drucksegment (3) eine auf das Mitnehmerteil (5) wirkende Druckkraft und ein auf die Kurbelwelle (2) wirkendes Drehmoment erzeugt wird, wobei das Drucksegment (3) im Kontaktzustand unmittelbar gegen das Mitnehmerteil (5) anliegt und wobei das Mitnehmerteil (5) bei Rotation der Kurbelwelle (2) eine lediglich rotatorische Bewegung entlang einer Kreisbahn um die Drehachse der Kurbelwelle (2) ausführt, **dadurch gekennzeichnet, dass** das Drucksegment (3) bei Erreichen eines bestimmten Dreh- bzw. Kurbelwellenwinkels mindestens um den im Kontaktzustand von Drucksegment (3) und Mitnehmerteil (5) zur Kurbelwelle hin ausgeführten Verstellweg zurückbewegt und dabei von dem Mitnehmerteil (5) entkoppelt wird, bevor das Mitnehmerteil (5) bei einer nächsten Umdrehung erneut mit dem Drucksegment (3) in Kontakt tritt.

2. Kurbelwellenanordnung nach Anspruch 1, **dadurch gekennzeichnet, dass** die Kurbelwelle (2) wenigstens eine Kurbelwange (8) aufweist, wobei an der Kurbelwange (8) das Mitnehmerteil (5) exzentrisch festgesetzt oder exzentrisch gelagert ist oder wobei die Kurbelwange (8) eine Außenkontur derart aufweist, dass ein Exzenterabschnitt der Kurbelwange (8) das Mitnehmerteil (5) bildet.

3. Kurbelwellenanordnung nach Anspruch 1 oder 2, **dadurch gekennzeichnet, dass** das Mitnehmerteil (5) und/oder das Drucksegment (3) eine reibungsmindernde Beschichtung aufweist, die im Kontaktzustand gegen das Drucksegment (3) bzw. das Mitnehmerteil (5) anliegt und reibungsmindernd wirkt.

4. Kurbelwellenanordnung nach einem der vorhergehenden Ansprüche, **dadurch gekennzeichnet, dass** das Mitnehmerteil (5) und/oder das Drucksegment (3) ein Roll-, Gleit- oder Wälzelement aufweist, das im Kontaktzustand gegen das Drucksegment (3) bzw. das Mitnehmerteil (5) anliegt und reibungsmindemd wirkt.

5. Kurbelwellenanordnung nach einem der vorhergehenden Ansprüche, **dadurch gekennzeichnet, dass** eine Mehrzahl von Drucksegmenten (3) und/oder eine Mehrzahl von Mitnehmerteilen (5) vorgesehen sind.

6. Kurbelwellenanordnung nach einem der vorhergehenden Ansprüche, **dadurch gekennzeichnet, dass** das Drucksegment (3) auf der dem Mitnehmerteil (5) zugewandten Seite eine Kurvenbahn (6) aufweist, auf der das Mitnehmerteil (5) bei Rotation der Kurbelwelle (2) zumindest bereichsweise abläuft, wobei, vorzugsweise, die resultierende im Kontaktpunkt auf das Mitnehmerteil (5) oder das Drucksegment (3) wirkende Druckkraft über die gesamte Länge der Kurvenbahn (6), über die das Mitnehmerteil (5) mit dem Drucksegment (3) in Kontakt tritt, eine Gerade durch den Drehpunkt der Kurbelwelle (2) und den Kontaktpunkt schneidet.

7. Kurbelwellenanordnung nach Anspruch 6, **dadurch gekennzeichnet, dass** die Kurvenbahn (6) halbkreisförmig ist, wobei der Radius der Kurvenbahn (6) größer ist als der Abstand vom Drehpunkt der Kurbelwelle (2) zum Kontaktpunkt zwischen Drucksegment (3) und Mitnehmerteil (5) und wobei der Drehpunkt der Kurbelwelle (2) und der Mittelpunkt der Kurvenbahn (6) nicht zusammenfallen.

8. Kurbelwellenanordnung nach Anspruch 6, **dadurch gekennzeichnet, dass** die Kurvenbahn (6) halbkreisförmig ist, wobei der Radius der Kurvenbahn (6) im wesentlichen dem Abstand vom Drehpunkt der Kurbelwelle (2) zum Kontaktpunkt zwischen Drucksegment (3) und Mitnehmerteil (5) entspricht und wobei der Drehpunkt der Kurbelwelle (2) und der Mittelpunkt der Kurvenbahn (6) zusammenfallen.

9. Kurbelwellenanordnung nach einem der vorhergehenden Ansprüche, **dadurch gekennzeichnet, dass** die Druckkraft über eine einem Kurbelwellenwinkelbereich von 20 bis 150°, vorzugsweise von 10 bis 160° oder mehr, entsprechende Bogenlänge der Kurvenbahn (6) übertragen wird.

10. Kraftmaschine mit einer eine Arbeitsmaschine, wie einen Generator oder eine Pumpe, antreibenden Kurbelwellenanordnung (1) nach einem der vorhergehenden Ansprüche und mit einem insbesondere druckgas- oder druckluftbetriebenen Antrieb zur Bewegung wenigstens eines Drucksegmentes (3) oder einer Kurbelwelle (2) der Kurbelwellenanordnung (1).

**Claims**

1. A crankshaft arrangement (1) comprising a crankshaft (2) and at least one pressure segment (3), designed for converting a movement of the pressure segment (3) into a rotational movement of the crankshaft (2) or vice versa, wherein the pressure segment (3) can be moved periodically towards the crankshaft (2) and away from the crankshaft (2) and only periodically contacts a driving part (5) connected to the crankshaft (2), wherein in the contact state, a compression force acting on driving part (5) and a torque acting on the crankshaft (2) are generated by the pressure segment (3), wherein in the contact state, the pressure segment (3) rests directly against the driving part (5), and wherein during the rotation of the crankshaft (2), the driving part (5) only performs a rotational movement along a circular path around the rotational axis of the crankshaft (2), **characterized in that** the pressure segment (3), upon reaching a certain rotational angle or crankshaft angle, is moved back at least by the adjustment travel performed towards the crankshaft in the contact state of pressure segment (3) and driving part (5) and thereby is decoupled from the driving part (5) before the driving part (5) contacts the pressure segment (3) again during a following rotation.

2. The crankshaft arrangement according to claim 1, **characterized in that** the crankshaft (2) has at least one crank cheek (8), wherein the driving part (5) is eccentrically fixed or eccentrically mounted on the crank cheek (8), or wherein the crank cheek (8) has an outer contour in such a manner that an eccentric portion of the crank cheek (8) forms the driving part (5).

3. The crankshaft arrangement according to claim 1 or claim 2, **characterized in that** the driving part (5) and/or the pressure segment (3) has a friction-reducing coating which, in the contact state, rests against the pressure segment (3) or the driving part (5) and acts in a friction-reducing manner.

4. The crankshaft arrangement according to any one of the preceding claims, **characterized in that** the driving part (5) and/or the pressure segment (3) have a rolling, sliding or ant-friction element which, in the contact state, rests against the pressure segment (3) or the driving part (5) and acts in a friction-reducing manner.

5. The crankshaft arrangement according to any one of the preceding claims, **characterized in that** a plurality of pressure segments (3) and/or a plurality of driving parts (5) are provided.

6. The crankshaft arrangement according to any one of the preceding claims, **characterized in that** on the side facing towards the driving part (5), the pressure segment (3) has a cam track (6) on which the driving part (5) runs at least in certain sections during the rotation of the crankshaft (2), wherein, preferably, the resulting compression force acting in the contact point on the driving part (5) or the pressure segment (3) intersects, over the entire length of the cam track (6) via which the driving part (5) contacts the pressure segment (3), a straight line through the center of rotation of the crankshaft (2) and the contact point.

7. The crankshaft arrangement according to claim 6, **characterized in that** the cam track (6) is semicircular, wherein the radius of the cam track (6) is larger than the distance from the center of rotation of the crankshaft (2) to the contact point between the pressure segment (3) and the driving part (5), and wherein the center of rotation of the crankshaft (2) and the center point of the cam track (6) do not coincide.

**8.** The crankshaft arrangement according to claim 6, **characterized in that** the cam track (6) is semicircular, wherein the radius of the cam track (6) substantially corresponds to the distance from the center of rotation of the crankshaft (2) to the contact point between the pressure segment (3) and the driving part (5), and wherein the center of rotation of the crankshaft (2) and the center point of the cam track (6) coincide.

**9.** The crankshaft arrangement according to any one of the preceding claims, **characterized in that** the compression force is transmitted over an arc length of the cam track (6), which arc length corresponds to a crankshaft angular range of from 20 to 150°, preferably of from 10 to 160° or more.

**10.** A power machine, comprising a crankshaft arrangement (1) according to any one of the preceding claims that drives a work machine such as a generator or a pump, and a drive that is in particular operated by compressed gas or compressed air for moving at least one pressure segment (3) or a crankshaft (2) of the crankshaft arrangement (1).

**Revendications**

**1.** Agencement de vilebrequin (1), comprenant un vilebrequin (2) et au moins un segment de pression (3), conçu pour transformer un mouvement du segment de pression (3) en une rotation du vilebrequin (2) ou inversement, sachant que le segment de pression (3) est mobile de façon périodique en direction du vilebrequin (2) ou en s'éloignant du vilebrequin (2) et entre en contact uniquement de façon périodique avec une partie d'entraînement (5) reliée au vilebrequin (2), sachant que lorsque le segment de pression (3) est en état de contact, une force de pression agissant sur la partie d'entraînement (5) et un couple de rotation agissant sur le vilebrequin (2) sont produits, sachant que le segment de pression (3), dans l'état de contact, repose directement contre la partie d'entraînement (5), et sachant que la partie d'entraînement (5), lorsque le vilebrequin (2) tourne, exécute uniquement une rotation le long d'une orbite autour de l'axe de rotation du vilebrequin (2), **caractérisé en ce que** le segment de pression (3), lorsqu'un angle défini de rotation, respectivement de vilebrequin, est atteint, est ramené au moins autour du trajet de décalage effectué dans l'état de contact du segment de pression (3) et de la partie d'entraînement (5) en direction du vilebrequin et est ainsi découplé de la partie d'entraînement (5), avant que la partie d'entraînement (5) ne soit à nouveau en contact avec le segment de pression (3) à une rotation suivante.

**2.** Vilebrequin selon la revendication 1, **caractérisé en ce que** le vilebrequin (2) présente au moins un bras de manivelle (8), sachant que la partie d'entrainement (5) est déterminée de façon excentrique ou disposée de façon excentrique sur le bras de manivelle (8) ou sachant que le bras de manivelle (8) présente un contour extérieur tel qu'une section d'excentrique du bras de manivelle (8) forme la partie d'entrainement (5).

**3.** Vilebrequin selon la revendication 1 ou 2, **caractérisé en ce que** la partie d'entraînement (5) et/ou le segment de pression (3) présente(nt) un revêtement réduisant le frottement, qui, dans l'état de contact, repose contre le segment de pression (3), respectivement, la partie entraînante (5) et agit en réduisant le frottement.

**4.** Vilebrequin selon l'une des revendications précédentes, **caractérisé en ce que** la partie d'entraînement (5) et/ou le segment de pression (3) présente(nt) un élément de rouleau, de coulissement ou de cylindre qui, dans l'état de contact, repose contre le segment de pression (3), respectivement, la partie entraînante (5) et agit en réduisant le frottement.

**5.** Vilebrequin selon l'une des revendications précédentes, **caractérisé en ce qu'**une pluralité de parties d'entraînement (5) et/ou une pluralité de segments de pression (3) sont prévus.

**6.** Vilebrequin selon l'une des revendications précédentes, **caractérisé en ce que** le segment de pression (3) présente une trajectoire incurvée (6) sur le côté tourné vers la partie d'entraînement (5), que la partie d'entraînement (5) parcourt au moins par tronçons lorsque le vilebrequin (2) tourne, sachant que de préférence, la force de pression qui en résulte agissant sur la partie d'entraînement (5) ou le segment de pression (3) dans le point de contact, coupe sur toute la longueur de la trajectoire incurvée (6), sur laquelle la partie d'entrainement (5) est en contact avec le segment de pression (3), une droite à travers le centre de rotation du vilebrequin (2) et le point de contact.

**7.** Vilebrequin selon la revendication 6, **caractérisé en ce que** la trajectoire incurvée (6) est en forme de demi-cercle, sachant que le rayon de la trajectoire incurvée (6) est plus grand que la distance du centre de rotation du vilebrequin (2) au point de contact entre le segment de pression (3) et la partie d'entraînement (5) et sachant que le centre de rotation du vilebrequin (2) et le point médian de la trajectoire incurvée (6) ne coïncident pas.

**8.** Vilebrequin selon la revendication 6, **caractérisé en ce que** la trajectoire incurvée (6) est en forme de demi-cercle, sachant que le rayon de la trajectoire incurvée (6) correspond essentiellement à la distance du centre de rotation du vilebrequin (2) au point de contact entre le segment de pression (3) et la partie d'entraînement (5) et sachant que le centre de rotation du vilebrequin (2) et le point médian de la trajectoire incurvée (6) coïncident.

**9.** Vilebrequin selon l'une des revendications précédentes, **caractérisé en ce que** la force de pression est transmise par une longueur de rayon de la trajectoire incurvée (6) correspondant à une plage angulaire de vilebrequin de 20 à 150°, de préférence de 10 à 160° ou plus.

**10.** Machine motrice comprenant un agencement de vilebrequin (1) selon l'une des revendications précédentes entraînant une machine-outil comme un générateur ou une pompe, et comprenant un entraînement en particulier à gaz comprimé ou air comprimé pour déplacer au moins un segment de pression (3) ou un vilebrequin (2) de l'agencement de vilebrequin (1).

Fig. 1

Fig. 2

Fig. 5

Fig. 4

Fig. 3

Fig. 6

Fig. 7

Fig. 8

EP 2 570 699 B1

Fig. 9

EP 2 570 699 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5331926 A
- DE 102006012326 A1